# EUROPÄISCHE PATENTANMELDUNG

(11) **EP 1 078 808 A1**
(43) Veröffentlichungstag der Anmeldung: **28.02.2001**
(21) Anmeldenummer: 00250280.5
(22) Anmeldetag: 17.08.2000
(51) Int. Cl.: B60N 2/02, B60N 2/48

(54) **Verstelleinrichtung für ein verstellbares Sitzteil eines Kraftfahrzeugsitzes**

(30) Priorität: 23.08.1999 DE 19940938
(71) Anmelder: Brose Fahrzeugteile GmbH & Co. KG Coburg, 96450 Coburg (DE)
(72) Erfinder: Schumann, Peter, Dipl.-Ing., 96253 Untersiemau (DE)
(74) Vertreter: Baumgärtel, Gunnar

(57) **Zusammenfassung**

Die Erfindung betrifft eine Verstelleinrichtung für ein verstellbares Sitzteil eines Kraftfahrzeugsitzes, insbesondere für eine verstellbare Kopf- oder Schenkelstütze, mit einem fremdkraftbetätigten Antrieb, einem Verstellgetriebe, über den das Sitzteil mit dem Antrieb gekoppelt und entlang mindestens einer Richtung verstellbar ist, und Mitteln zum Aktivieren des Antriebs, um eine Verstellbewegung des Sitzteiles auszulösen. Erfindungsgemäß ist vorgesehen, daß die Mittel zum Aktivieren des Antriebs (20) eine Erfassungseinheit (3; 18; 28, 29; 50) aufweisen, mit der die Einwirkung einer äußeren Kraft auf das Sitzteil (10) entlang einer Verstellrichtung (A, B) des Sitzteiles (10) detektierbar und der Antrieb (20) zur Durchführung einer Verstellbewegung entlang dieser Richtung (A, B) aktivierbar ist.

## Beschreibung

Die Erfindung betrifft eine Verstelleinrichtung für ein verstellbares Sitzteil eines Kraftfahrzeugsitzes nach dem Oberbegriff des Patentanspruchs 1.

Dabei geht es insbesondere um Sitzteile, die einen verstellbaren Endabschnitt eines Sitzes bilden, wie eine Kopfstütze oder eine Schenkelstütze. Letztere bilden den verstellbaren Endabschnitt eines größeren, tragenden Sitzteiles, nämlich einer Rückenlehne bzw. eines Sitzkissens, und dienen zur Abstützung definierter Körperteile, nämlich des Kopfes bzw. der Oberschenkel.

Aus der Deutschen Patentschrift DE 43 25 996 C2 ist eine Verstellvorrichtung für eine motorisch einstellbare Kopfstütze eines Kraftfahrzeugsitzes bekannt, bei der die an Führungsstangen befestigte und in Führungshülsen geführte Kopfstütze mit einem Verstellgetriebe verbunden ist, das wiederum mit einem Antriebsmotor gekoppelt ist. Dabei sind sowohl der Motor als auch das Getriebe der Verstellvorrichtung zwischen den Führungsstangen im oberen Bereich des Lehnenkörpers des Sitzes angeordnet, und die Verstellvorrichtung besteht aus zwei zueinander verschieblichen Teilen, von denen das Erste den Motor sowie ein mit dem Motor gekoppeltes Zahnradgetriebe trägt und von denen das Zweite eine mit einem Ritzel des Zahnradgetriebes kämmende Zahnstange sowie Befestigungen für die Führungsstangen der Kopfstütze umfasst. Bei einer Aktivierung des Motors zum Verstellen der Kopfstütze wird die Zahnstange mittels des zugeordneten Sitzes in Längsrichtung verschoben, was eine entsprechende Verschiebung der mit der Zahnstange verbundenen Führungsstangen der Kopfstütze und somit der Kopfstütze selbst zur Folge hat. Demnach kann die Position der Kopfstütze durch Betätigen eines hierfür vorgesehenen Bedienelementes und die daraufhin ausgelöste Aktivierung der Antriebseinheit in eine gewünschte Position verschoben werden.

Desweiteren sind auch manuelle Kopfstützenverstellungen verbreitet, bei denen eine auf einem Kraftfahrzeugsitz befindliche Personen mit ihren Händen unmittelbar die Kopfstütze selbst ergreift und in eine ihr angenehme Position zieht bzw. drückt.

Vergleichbare Verstellvorrichtungen sind auch für Oberschenkelstützen, vergleiche DE 35 16 481 C1 und DE 36 18 673 C2, sowie für weitere Sitzteile bekannt.

Bei allen diesen Sitzteilen besteht das Problem, daß sie von einer auf dem Sitz befindlichen Person häufig nicht in die optimale Position verstellt werden. Dies mindert nicht nur den Sitzkomfort, sondern führt darüberhinaus zu einer erheblichen Erhöhung des unfallbedingten Verletzungsrisikos.

Zur Beseitigung dieses Problems ist vorgeschlagen worden, die Verstellung eine Sitzteiles an die Einstellung der Position eines anderen Sitzteiles zu koppeln. So ist aus der DE 40 38 279 C2 eine an die Einstellung der Sitzlängsposition gekoppelte Zwangsverstellung einer Schenkelstütze bekannt. Hierbei wird in Abhängigkeit von einer zuvor gewählten Sitzlängsposition automatisch eine definierte Position der Schenkelstütze angefahren.

Derartige Zwangskopplungen haben jedoch den Nachteil, daß sie nur bei solchen Personen besonders geeignet sind, deren Proportionen in einem Normalbereich liegen und bei denen daher aus der Einstellung eines bestimmten Sitzteiles auf die optimalen Verstellpositionen weiterer Sitzteile geschlossen werden kann. Sie gewährleisten daher nicht in jedem Fall eine optimale Einstellung der Sitzteile im Hinblick auf den Sitzkomfort sowie die Sicherheit des entsprechenden Fahrzeuginsassen.

Der Erfindung liegt die Aufgabe zugrunde, eine Verstelleinrichtung für ein verstellbares Sitzteil eines Kraftfahrzeugsitzes der eingangs genannten Art zu schaffen, die dem Fahrzeuginsassen die Einstellung einer optimalen Position des entsprechenden Sitzteiles erleichtert.

Diese Aufgabe wird erfindungsgemäß durch die Schaffung einer Verstelleinrichtung mit den Merkmalen des Patentanspruchs 1 gelöst.

Danach ist bei einer fremdkraftbetätigten Verstelleinrichtung für ein verstellbares Sitzteil mit einem Verstellantrieb und Mitteln zum Aktivieren dieses Antriebs eine Erfassungseinheit vorgesehen, mit der die Einwirkung einer äußeren Kraft auf das Sitzteil entlang einer Verstellrichtung des Sitzteiles detektierbar und der Antrieb zur Durchführung einer Verstellbewegung entlang dieser Richtung aktivierbar ist.

Die durch den Antrieb ausgelöste Verstellbewegung des Sitzteiles erfolgt also stets in der Richtung, entlang der die äußere Kraft auf das Sitzteil einwirkt. Hierdurch wird eine servo-unterstützer Verstellmechanismus (Servomechanismus) geschaffen, der eine manuelle Einwirkung auf das zu verstellende Sitzteil in eine fremdkraftbetätige Verstellbewegung umsetzt.

Die erfindungsgemäße Lösung hat den Vorteil, daß sie den Bedingkomfort einer Sitzverstelleinrichtung erheblich erhöht. Empfindet eine auf dem entsprechenden Sitz befindliche Person die aktuelle Einstellung eines Sitzteiles als unangenehm und greift sie daher nach diesem Sitzteil, um dessen Position zu verändern, so wird automatisch (servo-unterstützt) der zu dem entsprechenden Sitzteil gehörende Verstellantrieb aktiviert und das Sitzteil fremdkraftbetätigt in der Richtung bewegt, entlang der der Fahrzeuginsasse eine Kraft auf das Sitzteil ausübt.

Der Fahrzeuginsasse braucht sich keine Gedanken darüber zu machen, ob es sich hier um eine fremdkraftbetätigte (also insbesondere elektrische) oder um eine manuelle Verstelleinrichtung handelt. Denn bei einer manuellen Einwirkung auf das zu verstehende Sitzteil wird automatisch der Antrieb aktiviert und eine Verstellung des Sitzteiles in der gewünschten Richtung vorgenommen. Hierdurch wird vermieden, daß die Einstellung eines Sitzteiles nur deshalb unterbleibt, weil ein Fahrgast unsicher ist, ob es sich hier um eine elektrische oder eine manuelle Verstelleinrichtung handelt, weil der Fahrgast vergeblich an einem elektrisch verstellbaren Sitzteil rüttelt oder weil der Fahrgast das zum Auslösen der elektrischen Verstelleinrichtung vorgesehene Bedienelement nicht findet.

Bei der erfindungsgemäßen Verstelleinrichtung genügt das reflexartige Ergreifen des entsprechenden Sitzteiles und die Ausübung einer Kraft entlang einer möglichen Verstellrichtung dieses Sitzteiles, um den fremdkraftbetätigten, vorzugsweise elektrischen Antrieb zu aktivieren und eine durch diesen Antrieb bewirkte Verstellbewegung in Gang zu setzen.

Der Antrieb bleibt dabei vorzugsweise nur so lange aktiviert, wie der Fahrzeuginsasse mit seinen Händen auf das entsprechende Sitzteil einwirkt.

Um die Bestimmung einer auf das Sitzteil wirkenden äußeren Kraft zu ermöglichen, kann das Sitzteil mittels mindestens eines vorgespannten elastischen Elementes federnd gelagert werden, dessen Vorspannkraft entgegen der Verstellrichtung des Sitzteiles wirkt. Dies ermöglicht die Detektion einer auf das Sitzteil ausgeübten äußeren Kraft als einer entgegen der Vorspannung des elastischen Elementes wirkenden Kraft.

Unter der Detektion bzw. Bestimmung der äußeren Kraft wird dabei nicht die Bestimmung des Absolutwertes dieser Kraft verstanden; denn hierrauf kommt es vorliegend nicht an. Es ist lediglich erforderlich, daß das Auftreten einer Kraft erfasst wird, die einen bestimmten Mindestwert überschreitet und daher als Folge einer versuchten Verschiebung des entsprechenden Sitzteiles durch einen Fahrzeuginsassen angesehen werden kann. Wichtig ist allerdings, daß die Richtung der äußeren Kraft detektierbar ist, so daß beispielsweise bei einer Kopfstütze festgestellt werden kann, ob der Fahrgast eine Verstellung nach oben oder nach unten wünscht.

Darüber hinaus ist es von Bedeutung, ein fehlerhaftes Auslösen des Antriebs der Verstelleinrichtung zu vermeiden, das beispielsweise als Folge von Stößen beim Befahren unebener Strecken auftreten könnte. Hierzu kann vorgesehen sein, daß aufgrund einer auf das Sitzteil einwirkenden äußeren Kraft der Antrieb der Verstelleinrichtung nur dann aktiviert wird, wenn die Dauer der entsprechenden Krafteinwirkung einen vorgebbaren Mindestwert überschreitet. Diese Variante ist insbesondere bei elektronisch gesteuerten Verstellantrieben ohne weiteres realisierbar, deren Elektronik die erforderliche Auswertung der Signale übernimmt

Bei einer bevorzugten Ausführungsform der Erfindung ist die Erfassungseinheit ausgebildet zur Detektion der auf das Sitzteil wirkenden Kraft anhand einer aufgrund dieser Kraft hervorgerufenen Bewegung des Sitzteiles oder eines Bauteiles des (aus dem Antriebsmotor und dem Verstellgetriebe bestehenden) Verstellmechanismus. Hierzu kann ein elastisches Element vorgesehen sein, mit dem das Sitzteil bzw. das Bauteil des Verstellmechanismus in einer Ruhelage gehalten wird und mit es nach einer aufgrund der äußeren Kraft hervorgerufen, die Detektion dieser Kraft ermöglichenden Bewegung aus der Ruhelage heraus wieder in diese Ruhelage bringbar ist.

Um eine geringfügige Bewegung des Sitzteiles aufgrund der äußeren Kraft zu ermöglichen, wird dieses (sowie gegebenenfalls das entsprechende Bauteil des Verstellmechanismus) mit hinreichend Spiel gelagert, so daß bei einer an dem Sitz angreifenen und entlang einer Verstellrichtung des Sitzteiles wirkenden äußeren Kraft eine geringfügige, jedoch so ausreichende Bewegung des Sitzteiles erfolgt, daß eine Detektion der äußeren Kraft vorgenommen werden kann. Diese geringfügige Bewegung ist zu unterscheiden von der eigentlichen Verstellbewegung, die im Anschluß an die Detektion der erstgenannten, geringfügigen Bewegung mittels des hierfür vorgesehenen Verstellantriebs in Gang gesetzt wird.

Nach einer Variante der Erfindung umfasst die Erfassungseinheit einen Sensor, mit dem eine durch die äußere Kraft erzeugte Bewegung des Sitzteiles oder eines Bauteiles des Verstellmechanismus detektierbar ist und der in Abhängigkeit hiervon ein Signal zum Aktivieren des Antriebs erzeugt. Der Sensor ist vorzugsweise als ein berührungslos arbeitender Sensor ausgebildet.

Nach einer Ausführungsform ist der Sensor unmittelbar mit dem Antrieb gekoppelt und zur Detektion einer Veränderung der Position eines Antriebselementes aufgrund der äußeren Kraft vorgesehen, wobei hierzu das entsprechende Antriebselement mit hinreichend Getriebespiel gelagert sein muß.

Als Sensor kann dabei insbesondere ein ohnehin in der Verstelleinrichtung vorhandener Sensor verwendet werden, wie z. B. ein Hall-Sensor, mit dem die Drehung der Antriebswelle des Antriebsmotors zu Zwecken der Regelung des Motors erfassbar ist, oder ein Potentiometer, das Bestandteil einer Sitzmemory-Einrichtung zum automatischen Anfahren bestimmter, voreinstallbarer Sitzpositionen ist. Durch die gleichzeitige Verwendung eines ohnehin in die Verstelleinrichtung integrierten Sensors als Erfassungseinheit zur Erfassung einer auf das zu verstehende Sitzteil wirkenden äußeren Kraft wird die erfindungsgemäße Lösung mit einem minimalen gerätetechnischen Aufwand realisiert. Denn die Erfassungseinheit besteht dann im Wesentlichen aus einem Sensor, der zu anderen Zwecken als der Erkennung einer auf das Sitzteil wirkenden äußeren Kraft in jedem Fall vorhanden sein muß.

Nach einer anderen Ausführungsform wird der Sensor durch einen Bewegungs- oder Näherungssensor gebildet, der die Bewegung eines verschieblichen oder verschwenkbaren Bauteiles des Antriebsmechanismus, wie z. B. der Führungsstangen einer Kopfstütze, detektiert. Auch ein Schalter, der mit einem als Sensor dienenden Betätigungselement die Bewegung eines Bauteiles des Antriebsmechanismus mechanisch erfaßt, kann verwendet werden.

So ist nach einer weiteren Erfindungsvariante vorgesehen, daß die Erfassungseinheit einen ein Betätigungselement aufweisenden Schalter umfasst, der aufgrund der auf das Sitzteil wirkenden äußeren Kraft betätigbar ist und dadurch den Antrieb der Verstelleinrichtung aktiviert.

Bei Sitzteilen, die üblicherweise in zwei zueinander entgegengesetzten Richtungen verstellbar sind, ist hierbei vorgesehen, daß der Schalter in Abhängigkeit von der Richtung der äußeren Kraft in mindestens zwei unterschiedliche Schaltzustände bringbar ist, die jeweils eine Verstellbewegung in unterschiedlichen Verstellrichtungen auslösen. Alternativ könnte auch für jede Verstellrichtung ein seperater Schalter vorgesehen sein.

Der Begriff Schalter ist hierbei in seiner weitesten Bedeutung zu verstehen und soll insbesondere auch solche Schalter umfassen, die einen bestimmten Schaltzustand nur während der Dauer ihrer Betätigung einnehmen und danach automatisch in einen anderen Schaltzustand zurückkehren. Letzteres ist von Bedeutung für die Realisierung der bevorzugten Ausführungsform der Erfindung, wonach der Antrieb des Verstellmechanismus nur so lange aktiviert sein soll, wie eine äußere Kraft auf das Sitzteil ausgeübt wird.

Das Betätigungselement des Schalters kann durch Einwirkung eines Bauteiles des Verstellmechanismus betätigt werden, das aufgrund der auf das Sitzteil wirkenden äußeren Kraft bewegbar ist, wobei der Schalter vorzugsweise ein Betätigungselement in Form eines Schenkhebels aufweist, das mit dem genannten Bauteil des Verstellmechanismus zusammenwirkt.

Weiterhin kann vorgesehen sein, daß das Betätigungselement des Schalters mittels eines (vorgespannten) elastischen Elementes in Richtung auf einen ersten der minestens zwei Schaltzustände vorgespannt ist und das in Abhängigkeit von der Bewegungsrichtung des Sitzteiles entweder das Betätigungselement zur Bewegung in eine dem ersten Schaltzustand entsprechende Position freigegeben wird oder entgegen der Vorspannung des elastischen Elementes in eine dem zweiten Schaltzustand entsprechende Position bewegt wird. In Abhängigkeit von der Richtung der äußeren Kraft wird dabei jeweils der Schaltzustand aktiviert, der eine Verstellung des Sitzteiles entlang der durch die äußere Kraft vorgegebenen Richtung zur Folge hat.

Weitere Vorteile der Erfindung werden bei der nachfolgenden Beschreibung eines Ausführungsbeispiels anhand der Figuren deutlich werden.

Es zeigen:
- Figur 1 -: eine schematische Darstellung des oberen Teils einer Sitzlehne, die eine elektrisch verstellbare Kopfstütze aufweist;
- Figur 2 -: eine Erfassungseinheit, mit der die Ausübung einer äußeren Kraft auf eine Kopfstütze detektierbar und anschließend die Antriebseinheit der Kopfstützenverstellung aktivierbar ist;
- Figur 3 -: eine weitere Ausführungsform einer Erfassungseinheit, mit der die Ausübung einer äußeren Kraft auf eine Kopfstütze detektierbar und anschließend die Antriebseinheit der Kopfstützenverstellung aktivierbar ist;
- Figuren 4a und 4b -: ein Detail einer Erfassungseinheit der in Figur 3 dargestellten Art.

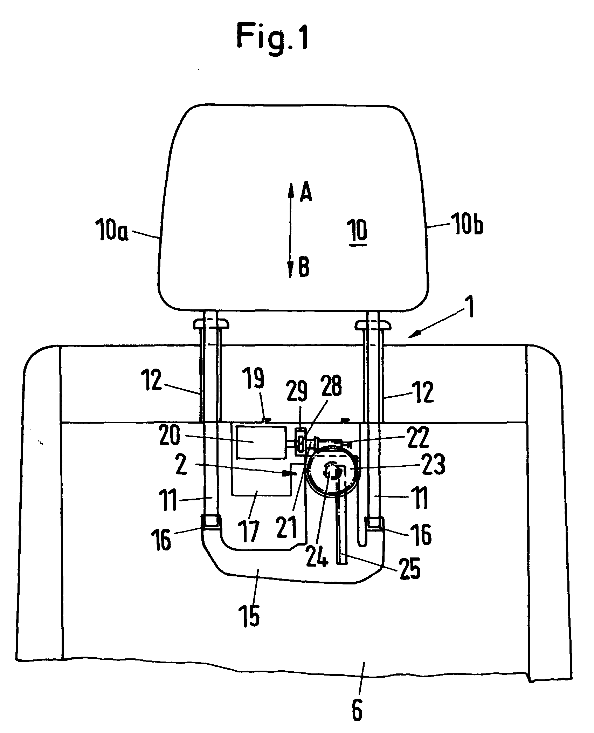

In Figur 1 ist der obere Teil des Körpers 6 einer Sitzlehne dargestellt, die eine entlang der Richtungen A, B in der Höhe verstellbare Kopfstütze 1 mit einem Kopfstützenkörper 10 aufweist. Der Kopfstützenkörper 10 ist an zwei Führungsstangen 11 befestigt, die längsverschieblich in Führungshülsen 12 des Lehnenkörpers 6 geführt sind.

Den Führungsstangen 11 ist ein Verstellmechanismus 2 zugeordnet, mit dem die Führungsstangen 11 in den Führungshülsen 12 zur Einstellung der Höhe des Kopfstützenkörpers 10 längs verschieblich sind. Der Verstellmechanismus 2 umfasst einen fremdkraftbetätigten Antrieb 20 in Form eines Elektromotores sowie ein hierdurch angetriebenes Verstellgetriebe 21-25, 11-16. Der Begriff Verstellgetriebe ist hierbei so zu verstehen, daß das Verstellgetriebe sämtliche Elemente umfasst, über die der Kopfstützenkörper 10 mit dem fremdkraftbetätigten Antriebsmotor 20 gekoppelt ist, also sämtliche Bauelemente von der Antriebswelle 21 des Antriebs 20 bis zu den Führungsstangen 11 der Kopfstütze 1 sowie den zugeordneten Führungshülsen 12.

Das Verstellgetriebe weist eine erste Verstelleinheit 21 - 24 auf, die gemeinsam mit dem Elektomotor 20 auf einer ersten, über Befestigungshaken 19 an dem Rückenlehnenkörper 6 befestigten Trägerplatte 17 gelagert ist. Diese erste Verstelleinheit umfasst eine auf der Antriebswelle 21 des Antriebs 20 gelagerte Schnecke 22, ein mit dieser Schnecke 22 kämmendes Schneckenrad 23 sowie ein auf dem Schneckenrad 23 koaxial gelagertes und sich mit diesem drehendes Ritzel 24.

Das Ritzel 24 steht in Eingriff mit einer sich parallel zu den Führungsstangen 11 erstreckende Zahnstange 25, die als Bestandteil einer zweiten Verstelleinheit 11 - 16, 25 des Verstellgetriebes auf einer zweiten Trägerplatte 15 gelagert ist, die bezüglich der ersten Trägerplatte 17 entlang der Verstellrichtungen A, B des Kopfstützenkörpers 10 verschieblich ist.

Eine durch den Antrieb 20 hervorgerufene Drehbewegung des Ritzels 24 führt zu einer Bewegung der Zahnstange 25 entlang einer der beiden Verstellrichtungen A, B des Kopfstützenkörpers 10 und zu einer entsprechenden Bewegung der zweiten Trägerplatte 15, mit der die Zahnstange 25 verbunden ist. Die Trägerplatte 15 weist zwei seitliche Befestigungshülsen 16 auf, in denen die Führungsstangen 11 des Kopfstützenkörpers 10 aufgenommen und befestigt sind. Über diese Befestigungshülsen wird die gemeinsame Längsbewegung der Zahnstange 25 und der zweiten Trägerplatte 15 auf die Führungsstangen 11 und somit auf den Kopfstützenkörper 10 übertragen.

Eine Drehung des Antriebs 20 und der hiermit verbundenen Antriebswelle 21 in die eine oder andere Richtung führt somit zu einer Verstellbewegung der Kopfstütze 10 entlang einer der beiden Verstellrichtungen A, B.

Für weitere Einzelheiten hinsichtlich des Aufbaus des Verstellmechanismus 2, die nicht Gegenstand der vorliegenden Erfindung sind, sei auf die DE 43 25 996 C2 verwiesen, in der der in Figur 1 dargestellte Verstellmechanismus detailiert beschrieben ist.

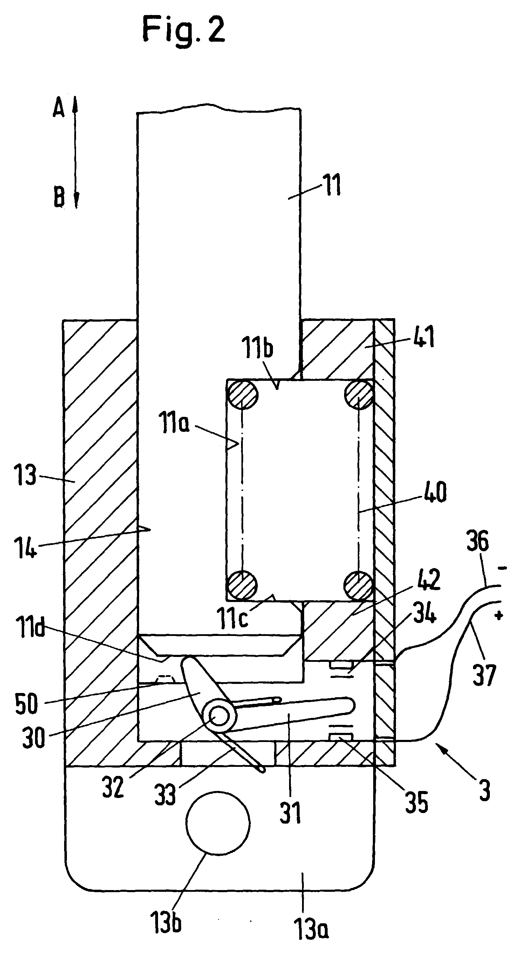

Von besonderer Bedeutung für die vorliegende Erfindung sind die in Figur 2 dargestellten Mittel zur Aktivierung des in Figur 1 dargestellten Verstellmechanismus, insbesondere von dessen Antrieb 20.

In Figur 2 ist eine besondere Ausgestaltung des unteren Endes einer der Führungsstangen 11 des Kopfstützenkörpers 10 (vergleiche Figur 1) dargestellt, das in einer in der Befestigungshülsen 16 aufgenommen werden kann. Das untere Ende dieser Führungsstange 11 ist von einer Aufnahme 13 umfasst, die eine Ausnehmung 14 zur Aufnahme des unteren Bereiches der Führungsstange 11 aufweist und die in einem unteren Endabschnitt 13a eine Befestigungsstelle 13b zu ihrer Befestigung in einer der Befestigungshülsen 16 (vergleiche Figur 1) aufweist.

In der Aufnahme 13 ist ferner eine vorgespannte Zugfeder in Form einer Schraubenfeder 40 angeordnet, die sich mit ihren beiden Enden zwischen zwei Anschlägen 41, 42 der Aufnahme 13 abstützt und die parallel zur Erstreckungsrichtung der Führungsstange 11 (und damit zu den Verstellrichtungen A, B) ausgerichtet und vorgespannt ist. Die Schraubenfeder 40 greift mit einem seitlichen Abschnitt in eine Ausnehmung 11a in der Führungsstange 11 ein und stützt sich dort mit ihren beiden Enden jeweils an einem Anschlag 11b, 11c der Führungsstange 11 in entgegengesetzter Richtung ab. Die Führungsstange 11 ist somit federnd in der Aufnahme 13 gelagert, d. h. es ist eine geringfügige Bewegung der Führungsstange 11 entgegen der Vorspannung der Schraubenfeder 40 entlang jeder der beiden Verstellrichtungen A, B des Kopfstützenkörpers 10 (vergleiche Figur 1) möglich. Bei dieser geringfügigen Bewegung der Führungsstange 11 handelt es sich jedoch nicht um eine Verstellbewegung, die unmittelbar eine Änderung der Position des Kopfstützenkörpers 10 zur Folge hat, sondern lediglich um eine Aktivierungsbewegung, die eine Verstellung des Kopfstützenkörpers mittels des in Figur 1 dargestellten Verstellmechanismus auslösen soll. Dies wird weiter unten noch im einzelnen erläutert werden.

Die untere Endfläche 11d der Führungsstange 11 steht in Kontakt mit einem Hebelarm 30 eines um eine Achse 32 verschwenkbaren Drehschalters 30 - 35. Der andere Hebelarm 33 des Drehschalters ist zwischen zwei elektrischen Kontakten 34, 35 angeordnet, die durch eine Schwenkbewegung des Drehschalters geschlossen werden können. Jeder dieser beiden Kontakte 34, 35 ist über eine elektrische Leitung 36 bzw. 37 mit dem Antrieb 20 des in Figur 1 dargestellten Verstellmechanismus verbunden. Der als Betätigungselement dienende erste Hebelarm 30 des Schwenkschalters 30 bis 35 ist außerdem mittels einer Drehfeder 33 in Richtung auf die untere Endfläche 11d der Führungsstange 11 vorgespannt.

Mit der in Figur 2 dargestellten Erfassungseinheit 3 läßt sich der in Figur 1 gezeigte Versteilmechanismus wie folgt auslösen:

Umgreift ein Fahrzeuginsasse zur Verstellung der Kopfstützenhöhe mit seinen Händen die beiden seitlichen Ränder 10a, 10b des Kopfstützenkörpers 10 und übt dann auf diesen eine Kraft entlang der gewünschten Verstellrichtung aus, so führt dies aufgrund der federnden Lagerung des Kopfstützenkörpers 10 über die in Figur 2 dargestellte Führungsstange 11 und die zugeordnete Schraubenfeder 40 zu einer geringfügigen Bewegung der Führungsstange 11 in Wirkrichtung der an den Kopfstützenkörper 10 angreifenden äußeren Kraft.

Bei einer Kraftwirkung entlang der Richtung A, enstprechend einer Verstellung des Kopfstützenkörpers 10 nach oben, wird die Führungsstange 11 geringfügig angehoben, so daß der nach oben in Richtung auf die untere Endfläche 11d der Führungsstange 11 vorgespannte erste Hebelarm 30 ebenfalls weiter nach oben schwenken kann. Dies wiederum hat zur Folge, daß mittels des zweiten Hebelarmes 31 des Drehschalters 30 bis 35 dessen untere Kontakt 35 geschlossen wird und über die zugehörige elektrische Leitung 37 der Antrieb 20 zu einer Antriebsbewegung aktiviert wird, die ein Anheben des Kopfstützenkörpers 10 entlang der Richtung A zur Folge hat.

Wird auf den Kopfstützenkörper 10 eine Kraft entlang der Richtung B zum Absenken des Kopfstützenkörpers 10 ausgeübt, so wird der erste Hebelarm 30 des Drehschalters 30 bis 35 mittels der unteren Endfläche 11b der Führungsstange 11 entgegen der Vorspannung der Drehfeder 33 nach unten gedrückt. Dies hat zur Folge, daß durch den zweiten Hebelarm 31 des Drehschalters 30 bis 35 dessen oberer Kontakt 34 geschlossen wird. Hierdurch wird über die elektrische Leitung 36 der Antrieb 20 zu einer Antriebsbewegung aktiviert, die ein Absenken des Kopfstützenkörpers 10 entlang der Richung B zur Folge hat.

Die Verstellung des Kopfstützenkörpers 10 beruht somit auf einem Servo-Effekt, da eine durch einen Fahrzeuginsassen ausgelöste geringfügige Bewegung des Kopfstützenkörpers 10 entlang der gewünschten Verstellrichtung zu einer automatischen Aktivierung des elektrisch angetriebenen Verstellmechanismus und somit zu einer servo-unterstützen, elektrischen Verstellung des Kopfstützenkörpers 10 entlang der gewünschten Verstellrichtung führt.

Die Vertellbewegung hält dabei nur so lange an, wie der Fahrzeuginsasse eine Kraft in der gewünschten Verstellrichtung auf den Kopfstützenkörper 10 ausübt. Sobald der Kopfstützenkörper 10 losgelassen wird, kehrt die Führungsstange 11 hinsichtlich ihrer Position innerhalb der Aufnahme 13 aufgrund der Wirkung der vorgespannten Schraubenfeder 40 wieder in die Figur 2 dargestellte Ruhelage zurück. Dies hat zur Folge, daß auch der Drehschalter 30 bis 35, dessen erster Hebelarm 30 mittels der Drehfeder 33 gegen die untere Endfläche 11d der Führungsstange 11 vorgespannt ist, wieder den in Figur 2 gezeigten Zustand einnimmt, in dem keiner der beiden Kontakte 34, 35 geschlossen ist. Hierdurch wird die Aktivierung des Antriebsmotors 20 unterbrochen und die Verstellung des Kopfstützenkörpers 10 beendet. Ist eine weitere Verstellung des Kopfstützenkörpers 10 erwünscht, so muß der Fahrzeuginsasse erneut eine entsprechende Kraft auf den Kopfstützenkörper 10 ausüben.

Grundsätzlich ist es natürlich auch denkbar, die Erfassungseinheit 3 so auszubilden, daß bei Ausübung einer äußeren Kraft auf den Kopfstützenkörper 10 eine definierte Verstellung des Kopfstützenkörpers 10 unabhänig von der Dauer der Kraftwirkung auftritt; der beste Verstellkomfort wird jedoch erreich, wenn die Dauer der Verstellbewegung unmittelbar an die Dauer der Kraftausübung gekoppelt ist. Denn in diesem Fall besteht das beste Zusammenspiel zwischen dem Fahrzeuginsassen, der auf den Kopfstützenkörper 10 einwirkt, und dem Verstellmechanismus, der daraufhin eine Verstellung des Kopfstützenkörpers 10 veranlasst.

Es sei noch darauf hingewiesen, daß aufgrund der Anordnung der Erfassungseinheit 3 am unteren Ende einer Führungsstange 11 in unmittelbarer Nähe des Antrieb 20 eine sehr kurze Kabelverbindung zwischen der Erfassungseinheit 3 und dem Antrieb 20 besteht. Hierdurch wird der Aufwand bei der Verkabelung des Antriebs 20 erheblich verringert. Dies gleicht die Mehrkosten, die beim Einbau des Figur 2 dargestellten Schalters im Vergleich zu einem gewöhnlichen manuellen Bedingelement zur Aktivierung des Antriebs entstehen, in jedem Fall aus.

Selbstverständlich kann die in Figur 2 dargestellte Erfassungseinheit 3 auch zusätzlich zu einem üblichen manuellen Bedingelement zur Aktivierung des Antriebs 20 vorgesehen sein. Der Fahrzeuginsasse kann dann wählen, ob er den Antrieb 20 mittels eines hierfür vorgesehenen Bedienelementes oder durch Ausübung einer Kraft auf den Kopfstützenkörper aktiviert.

In Figur 2 ist bei Position 50 gestrichelt ein Näherungssensor dargestellt, der an Stelle des Drehschalters 30 bis 35 zur Erfassung einer auf den Kopfstützenkörper 10 ausgeübten Kraft dienen kann. Wie oben im Einzelnen dargelegt wurde, führt eine solche Kraft zu einer geringfügigen Bewegung der Führungsstange 11, die wiederum von einem Bewegungs- oder Näherungssensor detektiert werden kann. Der Sensor erzeugt dann ein entsprechendes Signal, mit dem der Antrieb 20 aktiviert wird.

Zur Aktivierung des Antriebs 20 kann schließlich auch ein Hall-Sensor 29 dienen, der mit einem auf der Antriebswelle 21 angeordneten Magnetring 28 zusammenwirkt, vergl. Fig. 1, und die primäre Funktion hat, die Drehbewegung der Antriebswelle 21 zu überwachen, um mit einer geeigneten Elektronik des Antriebs in Abhängigkeit hiervon den Antrieb 20 regeln zu können. Durch Überwachung der Drehbewegung der Antriebswelle 21 kann indirekt der Weg ermittelt werden, den der Kopfstützenkörper 10 aufgrund einer bestimmten Verstellbewegung zurückgelegt hat, so daß das Hall-Element 29 auch im Zusammenhang mit einer Sitzmemory-Einrichtung verwendet werden kann, die zum automatischen Verfahren des Kopfstützenkörpers 10 in bestimmte, voreingestellte Positionen vorgesehen ist.

Dieses Hall-Element 29 kann zusätzlich auch zur Aktivierung des Antriebs 20 dienen, indem die Getriebelemente 21 bis 24 mit hinreichend Getriebespiel gelagert werden, so daß eine (durch an dem Kopfenstützenkörper wirkende äußere Kräfte verursachte) geringfügige Bewegung der Führungsstange 11 und damit auch der Zahnstange 25 zu einer entsprechenden geringfügigen Bewegung der Antriebswelle 21 führt, die wiederum von dem Hall-Element 29 durch Zusammenspiel mit dem Ringmagneten 28 detektiert werden kann. Zur Erkennung der Drehrichtung der Antriebswelle 21 ist hierbei gegebenenfalls ein zweites Hall-Element vorzusehen. In Abhängigkeit von der Richtung der geringfügigen Drehung der Antriebswelle 21 wird dann durch ein von dem Hall-Element erzeugtes Signal der Antrieb 20 zur Durchführung einer entsprechenden Verstellbewegung des Kopfstützenkörpers 10 aktiviert.

Mittels der Elektronik des Antriebs 20 kann während des Betriebs des Antriebs 20 auch festgestellt werden, ob die an dem Kopfstützenkörper 10 angreifende äußere Kraft, die zur Aktivierung des Antriebs 20 geführt hat, noch vorhanden ist. Denn eine Änderung der an dem Kopfstützenkörper 10 wirkenden Kraft beeinlußt automatisch die Momentanwerte einiger charakteristischer Größen des Antriebs, z.B. der Drehzahl, und ist dadurch bei einem geregelten Antrieb ohne weiteres erfaßbar. Gegebenenfalls kann zusätzlich ein vorgespanntes Federlement vorgesehen sein, das mit einem der Getriebelemente 21 - 24 in Wirkverbindung steht und entgegen der äußeren Kräfte wirkt. Fällt die äußere Kraft weg, so wird das genannte Getriebelement durch die Vorspannung des Federelementes eine (geringfügige) Bewegung erfahren, die durch die Elektronik des Antriebs registrierbar ist.

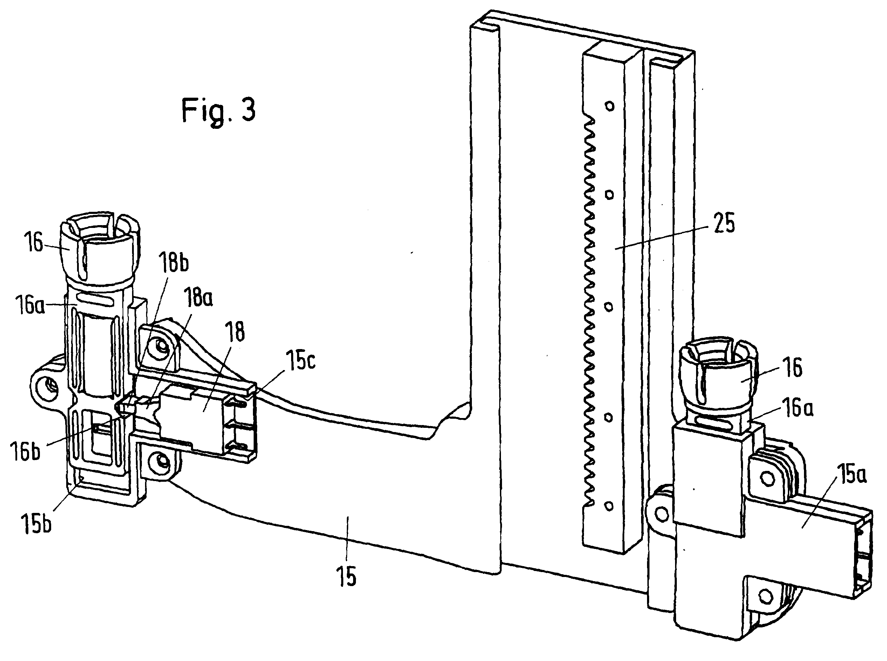

Bei dem in Fig. 3 dargestellten Ausführungsbeispiel sind in Abwandlung der Figuren 1 und 2 die zur Aufnahme der Führungsstangen 11 des Kopfstützenkörpers 10 (vergl. Fig. 1) vorgesehenen Befestigungshülsen 16 in Längsrichtung (d.h. parallel zur Erstreckungsrichtung der Führungsstangen 11) beweglich an der Getriebeplatte 15 angeordnet, die die Zahnstange 25 trägt. Hierzu schließt an jede der beiden Befestigungshülsen 16 ein Führungsabschnitt 16a an, der jeweils längsverschieblich in einem der beiden Gehäuse 15a geführt ist, die an zwei seitlichen Endabschnitten der Getriebeplatte 15 befestigt sind. Jedes der Gehäuse 15a weist eine Führungskammer 15b für den Führungsabschnitt 16a der jeweiligen Befestigungshülse 16 sowie einer Aufnahme 15c für einen Mikroschalter 18 auf. Jeder der Mikroschalter 18 ragt mit einem vorderen Endabschnitt 18b eines Betätigungselementes 18a in eine Aussparung 16b des Führungsabschnittes 16a der Befestigungshülse 16 hinein.

Die Mikroschalter 18 dienen zur Erfassung einer Längsbewegung des zugehörigen Führungsabschnittes 16a in der Führungskammer 15b des Gehäuses 15a. Da der Führungsabschnitt 16a (einstückig oder über zusätzliche Befestigungselemente) unmittelbar mit der Befestigungshülse 16 verbunden ist, die die Führungsstangen 11 des Kopfstützenkörpers 10 aufnimmt, führt der Versuch eines Insassen, die Kopfstütze entlang einer der Richtungen A, B (vgl. Fig. 1) nach oben oder unten zu bewegen, zu einer Längsbewegung des Führungsabschnittes 16a in der Führungskammer 15b. Diese Bewegung wird einschließlich ihrer Richtung durch das Betätigungselement 18a des Mikroschalters 18 registriert, der daraufhin ein entsprechendes Signal an den zur elektrischen Einstellung der Kopfstütze vorgesehenen Antrieb abgibt. Daraufhin erfolgt eine Verstellung der Kopfstütze mittels dieses Antriebs in entsprechender Weise wie bei den vorhergehend erläuterten Ausführungsbeispielen der Erfindung.

Damit der Führungsabschnitt 16a und damit auch die Befestigungshülse 16 bei Abwesenheit äußerer Kräfte an der Kopfstütze 1 bzw. an dem Kopfstützenkörper 10 stets in eine Ruhelage (Gleichgewichtslage) zurückkehren und dort verbleiben, ist der Führungsabschnitt 16a mittels eines elastischen Elementes in Richtung auf die entsprechende Gleichgewichtslage (die einer nicht ausgelenkten Stellung des Betätigungselementes 18a des Mikroschalters 18 entspricht) vorgespannt.

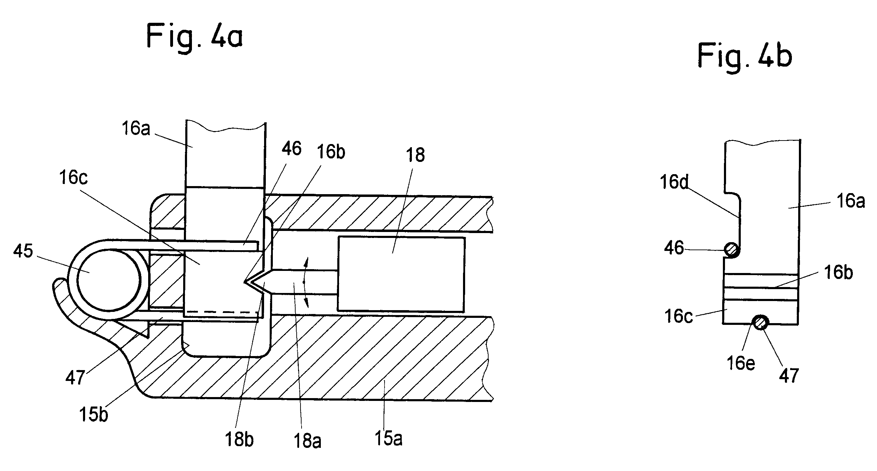

Hierzu kann gemäß Fig. 4a eine Drehfeder 45 mit zwei Schenkein 46, 47 vorgesehen sein, die an dem Gehäuse 15a befestigt ist und die mit ihren beiden Schenkeln 46, 47 den Führungsabschnitt 16a entlang zweier einander entgegengesetzter Richtungen in der Führungskammer 15b derart vorspannt, daß er dort bei Abwesenheit äußerer Kräfte eine definierte Gleichgewichtslage einnimmt. In dieser Gleichgewichtslage des Führungsabschnittes 16a ragt das Betätigungselement 18a des Mikroschalters 18 mit seinem Endabschnitt 18b in die zugeordnete Aussparung 16b des Führungsabschnittes 16a hinein, ohne ausgelenkt zu sein.

Bei einer Bewegung des Führungsabschnittes 16a in die eine oder andere Richtung (ausgelöst durch den Versuch eines Insassen, die entsprechende Kopfstütze manuell nach oben oder unten zu verschieben) entgegen der elastischen Kraft der Drehfeder 45 kommt es zu einer entsprechenden Bewegung des Betätigungselementes 18a des Mikroschalters 18 in die eine oder andere Richtung, woraufhin ein entsprechendes Steuersignal an den Antrieb zum Anheben oder Absenken der Kopfstütze gegeben wird.

In Fig. 4b ist im Detail in einer Seitenansicht der untere Bereich 16c des Führungsabschnittes 16a dargestellt. Man erkennt die Aussparung 16b, die dem Betätigungselement 18a des Betätigungsschalters 18 zugeordnet ist, sowie zwei weitere Aussparungen 16d, 16e, die jeweils einen der Schenkel 46, 47 der Drehfeder 45 aufnehmen.

Die Drehfeder 45 hat hierbei nicht nur die Funktion, daß der Führungsabschnitt 16a und damit die Befstigungshülse 156 bei Abwesenheit äußerer Kräfte wieder in ihre Gleichgewichtslage zurückkehren und dort verbleiben, sondern sie begrenzt zugleich die Längsbeweglichkeit des Führungsabschnittes 16a in der Führungskammer 15b des Gehäuses 15a.

Alle vorgenannten Ausführungsbeispiele zur Verstellung des Kopfstützenkörpers 10 in Abhängigkeit von einer auf den Kopfstützenkörper 10 ausgeübten äußeren Kraft können unmittelbar auch auf andere Sitzteile übertragen werden. So kann es sich bei dem Sitzteil 10 ebenso um eine Oberschenkelstütze handeln, die längsverschieblich an einem Sitzpolster (entsprechend dem Bauteil 6) geführt ist.

## Patentansprüche

1. Verstelleinrichtung für ein verstellbares Sitzteil eines Kraftfahrzeugsitzes, insbesondere für eine verstellbare Kopf- oder Schenkelstütze, mit
- einem fremdkraftbetätigten Antrieb,
- einem Verstellgetriebe, über den das Sitzteil mit dem Antrieb gekoppelt und entlang mindestens einer Richtung verstellbar ist, und
- Mitteln zum Aktivieren des Antriebs, um eine Verstellbewegung des Sitzteiles auszulösen,
**dadurch gekennzeichnet,**
daß die Mittel zum Aktivieren des Antriebs (20) eine Erfassungseinheit (3; 18; 28, 29; 50) aufweisen, mit der die Einwirkung einer äußeren Kraft auf das Sitzteil (10) entlang einer Verstellrichtung (A, B) des Sitzteiles (10) detektierbar und der Antrieb (20) zur Durchführung einer Verstellbewegung entlang dieser Richtung (A, B) aktivierbar ist.

2. Verstelleinrichtung nach Anspruch 1, **dadurch gekennzeichnet,** daß der Antrieb (20) mittels der Erfassungseinheit (3; 18; 28, 29; 50) nur solange aktiviert ist, wie die äußere Kraft auf das Sitzteil (10) wirkt.

3. Verstelleinrichtung nach Anspruch 2, **dadurch gekennzeichnet,** daß das Sitzteil (10) mittels mindestens eines vorgespannten elastischen Elementes (40; 45) federnd gelagert ist, dessen Vorspannkraft entgegen der Verstellrichtung (A, B) des Sitzteiles (10) wirkt.

4. Verstelleinrichtung nach einem der vorhergehenden Ansprüche, **dadurch gekennzeichnet,** daß die Erfassungseinheit (3; 18; 28, 29; 50) ausgebildet ist zur Detektion der auf das Sitzteil (10) wirkenden Kraft anhand einer aufgrund dieser Kraft hervorgerufenen Bewegung des Sitzteiles (10) oder eines Bauteiles (11, 21) des Verstellgetriebes (11 - 16, 21 - 25).

5. Verstelleinrichtung nach Anspruch 4, **dadurch gekennzeichnet,** daß mindestens ein elastisches Element (40; 45) vorgesehen ist, mit dem das Sitzteil (10) bzw. das Bauteil (11, 21) des Verstellgetriebes (11 - 16, 21 - 25) in einer Ruhelage gehalten wird und nach einer aufgrund der äußeren Kraft hervorgerufenen, die Detektion dieser Kraft ermöglichenden Bewegung aus der Ruhelage heraus wieder in die Ruhelage bringbar ist.

6. Verstelleinrichtung nach einem der vorhergehenden Ansprüche, **dadurch gekennzeichnet,** daß das Sitzteil (10) mit hinreichend Spiel gelagert ist, so daß bei einer an dem Sitzteil (10) angreifenden und entlang einer Verstellrichtung (A, B) des Sitzteiles (10) wirkenden äußeren Kraft eine geringfügige, jedoch so ausreichende Bewegung des Sitzteiles (10) erfolgt, daß eine Detektion der äußeren Kraft möglich ist.

7. Verstelleinrichtung nach einem der vorheregehednen Ansprüche, **dadurch gekennzeichnet,** daß die Erfassungseinheit (18; 28, 29; 50) einen Sensor (18a; 29; 30, 31; 50) umfaßt, mit dem eine durch die äußere Kraft erzeugte Bewegung des Sitzteiles (10) oder eines Bauteiles (11, 21) des Verstellgetriebes (11 - 16, 21 - 25) detektierbar ist und der in Abhängigkeit hiervon ein Signal zum Aktivieren des Antriebs (20) erzeugt.

8. Verstelleinrichtung nach Anspruch 7, **dadurch gekennzeichnet,** daß der Sensor (29; 50) als berührungslos arbeitender Sensor ausgebildet ist.

9. Verstelleinrichtung nach Anspruch 7, **dadurch gekennzeichnet,** daß der Sensor (18a; 30, 31) als mechanischer Sensor ausgebildet ist, der eine Bewegung des Sitzteiles (10) oder eines Bauteiles (11, 21) des Verstellgetriebes (11 - 16, 21 - 25) mechanisch abtastet.

10. Verstelleinrichtung nach einem der Ansprüche 7 bis 9, **dadurch gekennzeichnet,** daß mit dem Sensor (18a; 29; 30, 31; 50) die Änderung der Position eines Bauteiles (21) des Verstellgetriebes (11 - 16, 21 - 25) aufgrund der äußeren Kraft detektierbar ist.

11. Verstelleinrichtung nach Anspruch 10, **dadurch gekennzeichnet,** daß als Sensor (29) ein zur Regelung des Antriebs (20) oder zur Bestimmung der Position des Sitzteiles (10) ohnehin vorhandener Sensor verwendet wird.

12. Verstelleinrichtung nach Anspruch 9 oder 10, **dadurch gekennzeichnet,** daß der Sensor (29) durch einen Hall-Sensor gebildet, der mit einer Antriebswelle (21) des Antriebs (20) in Wirkverbindung steht, oder durch ein Potentiometer, das Bestandteil einer Sitzmemory-Einrichtung ist.

13. Verstelleinrichtung nach einem der Ansprüche 7 bis 11, **dadurch gekennzeichnet,** daß das Bauteil (11, 21) des Verstellgetriebes (11 - 16, 21 - 25) mit hinreichend Getriebespiel gelagert ist, so daß die auf das Sitzteil (10) wirkende äußere Kraft in eine Bewegung dieses Bauteiles (11, 21) umsetzbar ist.

14. Verstelleinrichtung nach Anspruch 8, **dadurch gekennzeichnet,** daß der Sensor (50) durch einen Bewegungs- oder Näherungssensor gebildet wird, der die Bewegung eines verschieblichen oder verschwenkbaren Bauteiles (11) des Antriebsmechanismus (11 - 16, 21 - 25) detekiert.

15. Verstelleinrichtung nach Anspruch 9, **dadurch gekennzeichnet,** daß der Sensor (18a) durch ein Betätigungselement eines Mikroschalters (18) gebildet wird.

16. Verstelleinrichtung nach einem der vorhergehenden Ansprüche, **dadurch gekennzeichnet,** daß die Erfassungseinheit (3; 18) einen ein Betätigungselement (18a; 30, 31) aufweisenden Schalter (18; 30 - 35) umfaßt, der aufgrund der auf das Sitzteil (10) wirkenden äußeren Kraft betätigbar ist und dadurch den Antrieb (20) aktiviert.

17. Verstelleinrichtung nach Anspruch 16, **dadurch gekennzeichnet,** daß der Schalter (18; 30 - 35) in Abhängigkeit von der Richtung der äußeren Kraft in mindestens zwei unterschiedliche Schaltzustände bringbar ist, die jeweils eine Verstellbewegung in unterschiedliche Verstellrichtungen (A, B) auslösen.

18. Verstelleinrichtung nach Anspruch 16 oder 17, **dadurch gekennzeichnet,** daß der Schalter (18; 30 - 35) durch Einwirkung eines Bauteiles (11) des Verstellgetriebes (11 - 16; 21 - 25) betätigbar ist, das aufgrund der auf das Sitzteil (10) wirkenden äußeren Kraft bewegbar ist.

19. Verstelleinrichtung nach Anspruch 18, **dadurch gekennzeichnet,** daß der Schalter (30 - 35) ein Betätigungselement (30, 31) in Form eines Schwenkhebels aufweist, das mit dem Bauteil (11) des Verstellgetriebes (11 - 16; 21 - 25) gekoppelt ist.

20. Verstelleinrichtung nach Anspruch 18 oder 19, **dadurch gekennzeichnet,** daß das Betätigungselement (30, 31) des Schalters (30 - 35) mittels eines elastischen Elementes (33) in Richtung auf einen ersten der mindestens zwei Schaltzustände vorgespannt ist und daß in Abhängigkeit von der Richtung einer durch die äußere Kraft ausgelösten geringfügigen Bewegung des Sitzteiles (10) entweder das Betätigungselement (30, 31) zur Bewegung in eine dem ersten Schaltzustand entsprechende Position freigegeben wird oder entgegen der Vorspannung des elastischen Elementes (33) in eine dem zweiten Schaltzustand entsprechende Position bewegt wird.
